# EUROPÄISCHE PATENTSCHRIFT

(11) **EP 4 040 029 B1**
(45) Veröffentlichungstag und Bekanntmachung des Hinweises auf die Patenterteilung: **18.02.2026**
(21) Anmeldenummer: 22154745.8
(22) Anmeldetag: 02.02.2022
(51) Int. Cl.: F16L 37/35, F16L 37/42

(54) **KUPPLUNGSVORRICHTUNG ZUR VERBINDUNG FLUIDFÜHRENDER BAUTEILE**
COUPLING DEVICE FOR CONNECTING FLUID-CARRYING COMPONENTS
DISPOSITIF D'ACCOUPLEMENT DESTINÉ AU RACCORDEMENT DES COMPOSANTS À CIRCULATION DE FLUIDE

(30) Priorität: 03.02.2021 DE 102021102527
(43) Veröffentlichungstag der Anmeldung: 10.08.2022
(73) Patentinhaber: Nickel, Klaus, 45527 Hattingen (DE)
(72) Erfinder: Nickel, Klaus, 45527 Hattingen (DE)
(74) Vertreter: Bals & Vogel Patentanwälte PartGmbB

(56) Entgegenhaltungen:
- CH-A- 368 669
- DE-A1- 102007 062 393
- US-A- 2 690 917
- US-A1- 2013 327 420
- US-A1- 2014 083 542

## Beschreibung

Die Erfindung betrifft eine Kupplungsvorrichtung zur Verbindung fluidführender Bauteile mit den Merkmalen des Oberbegriffs vom unabhängigen Vorrichtungsanspruch sowie ein Kupplungssystem mit den Merkmalen des Oberbegriffs vom nebengeordneten Vorrichtungsanspruch.

Ziel bei der Verbindung fluidführender Bauteile wie bspw. Rohre oder Schläuche ist es üblicherweise, einen Fluidstrom von mindestens einem ersten fluidführenden Bauteil in mindestens ein zweites fluidführendes Bauteil, welches in der Regel mit dem ersten Bauteil lösbar verbunden ist, herzustellen. Hierzu wird eine geeignete Verbindungsvorrichtung zwischen den fluidführenden Bauteilen platziert und an hierfür vorgesehenen Anschlussstellen der Verbindungsvorrichtung mit den fluidführenden Bauteilen verbunden. Einfache Vorrichtungen zur Verbindung fluidführender Bauteile wie bspw. Rohrverbinder oder Schlauchverbinder sind aus dem Stand der Technik bekannt.

Da der Fluidstrom in vielen Anwendungsfällen eine definierte Fließrichtung aufweist, wird in den folgenden Ausführungen zwischen Bauteilen, welche "stromab" der Verbindungsvorrichtung liegen und Bauteilen, welche "stromauf" der Verbindungsvorrichtung liegen unterschieden. Die Bezeichnung stromab bezeichnet hierbei eine Position eines Bauteils, welche von der Verbindungsvorrichtung aus gesehen, oder von einem anderen Bauteil auf das sich diese Positionsangabe bezieht aus gesehen, in Fließrichtung des Fluidstroms liegt. In anderen Worten liegt diese Position mit Bezug auf die Fließrichtung hinter der Verbindungsvorrichtung oder dem die Positionsangabe betreffenden Bauteil. Die Bezeichnung stromauf bezeichnet hingegen eine Position eines Bauteils, welche von der Verbindungsvorrichtung aus gesehen, oder von einem anderen Bauteil auf das sich diese Positionsangabe bezieht aus gesehen, entgegen der Fließrichtung des Fluidstroms liegt. In anderen Worten liegt diese Position mit Bezug auf die Fließrichtung des Fluidstroms also vor der Verbindungsvorrichtung oder dem die Positionsangabe betreffenden Bauteil.

Bei einer Vielzahl von Anwendungsfällen liegt die Situation vor, dass ein stromauf der Verbindungsvorrichtung angeordnetes fluidführendes Bauteil mit einem kontinuierlichen Fluidstrom beaufschlagt ist. Entsprechend ist es nicht ohne weiteres möglich, ein stromab der Verbindungsvorrichtung angeordnetes fluidführendendes Bauteil von der Verbindungsvorrichtung zu entfernen, da dies zum ungehinderten Austritt des Fluids aus der Verbindungsvorrichtung in die Umgebung führen würde. Genau diese Entfernung eines stromab angeordneten fluidführenden Bauteils ist jedoch aus Gründen der Wartung und/oder flexiblen Anlagengestaltung für viele Anwendungsfälle regelmäßig erforderlich. Im Rahmen dieser Anwendungsfälle werden Kupplungsvorrichtungen als Verbindungsvorrichtungen eingesetzt, die den am stromauf angeordneten fluidführenden Bauteil anliegenden kontinuierlichen Fluidstrom automatisch unterbrechen, sobald ein stromab der Kupplungsvorrichtung angeordnetes fluidführendes Bauteil von der Kupplungsvorrichtung entfernt wird. So wird ein ungehindertes Austreten des Fluids in die Umgebung automatisch unterbrochen und entsprechende Arbeiten an der Verbindungsstelle und/oder stromabwärts können durchgeführt werden.

Häufig ist allerdings ein Problem, dass die durch das Anschließen und Entfernen eines stromab angeordneten fluidführenden Bauteils ausgelösten Bewegungsabläufe innerhalb der Kupplungseinrichtung zu einem Verschleiß von Dichtungselementen (auch Dichtelemente genannt) führen. Dies führt letztlich zu einer Undichtigkeit der Kupplungseinrichtung, was wiederum bedeutet, dass keine zuverlässige Unterbrechung des anliegenden Fluidstroms mehr gewährleistet ist und Fluid unkontrolliert in die Umgebung gelangen kann. Sowohl aus Sicht der Wirtschaftlichkeit als auch in Bezug auf Betriebssicherheit und die Vermeidung von Umwelteinflüssen ist dies jedoch möglichst zu vermeiden. Entsprechend ist es erforderlich, die verbauten Kupplungsvorrichtungen regelmäßig auf Dichtigkeit zu prüfen und ggf. einen Austausch der verbauten Dichtelemente vorzunehmen. In diesem Zusammenhang hat sich weiterhin nachteilig gezeigt, dass bisherige Ausführungen von Kupplungsvorrichtungen üblicherweise radial angeordnete (ringförmige) Dichtelemente verwenden, welche sich über den gesamten Umfang eines meist rotationssymmetrischen Dichtkolbens erstrecken (bspw. Dichtringe). Diese Dichtelemente sind im montierten Zustand der Kupplungsvorrichtung meist schwer zugänglich und damit schwer austauschbar. Entsprechend hoch ist der Aufwand im Falle einer erforderlichen Wartung, da die Kupplungsvorrichtung zunächst zerlegt werden muss, bevor ein Austausch der betreffenden Dichtelemente erfolgen kann.

Kupplungsvorrichtungen sind aus der CH 368 669 A, US 2013/327420 A1, US 2014/ 0083542 A1, DE 10 2007 062393 A1 sowie US 2 690 917 A bekannt.

Es ist daher Aufgabe der vorliegenden Erfindung, zumindest einen der voranstehend beschriebenen Nachteile wenigstens teilweise zu überwinden. Insbesondere ist es Aufgabe der Erfindung, eine Kupplungsvorrichtung sowie ein Kupplungssystem bereitzustellen, welche über eine erhöhte Betriebssicherheit sowie einen reduzierten Wartungs- und Montageaufwand, insbesondere im Bezug eines Austauschens eines Dichtelements, verfügen.

Die voranstehende Aufgabe wir gelöst durch eine Kupplungsvorrichtung mit den Merkmalen des unabhängigen Vorrichtungsanspruchs sowie ein Kupplungssystem mit den Merkmalen des nebengeordneten Vorrichtungsanspruchs. Dabei kann das erfindungsgemäße Kupplungssystem die erfindungsgemäße Kupplungsvorrichtung aufweisen, so dass wechselseitig Bezug genommen werden kann zu den einzelnen technischen Merkmalen. Weitere Merkmale und Details der Erfindung ergeben sich aus den jeweiligen Unteransprüche, der Beschreibung sowie den Zeichnungen.

Erfindungsgemäß ist eine Kupplungsvorrichtung zur Verbindung zweier fluidführender Bauteile, insbesondere Rohre oder Schläuche oder dergleichen, für die Herstellung eines Fluidstroms vorgesehen, welche mindestens eine erste Kupplungsaufnahme, eine zweite Kupplungsaufnahme sowie einen Dichtkolben umfasst, wobei die erfindungsgemäße Kupplungsvorrichtung mit der ersten Kupplungsaufnahme mit dem ersten fluidführenden Bauteil verbindbar ist und mit der zweiten Kupplungsaufnahme mit dem zweiten fluidführenden Bauteil verbindbar ist. Die erste und zweite Kupplungsaufnahme können dabei ein einheitliches, materialeinheitliches und/oder stoffschlüssiges Bauteil bilden. Weiterhin weist die erfindungsgemäße Kupplungsvorrichtung mindestens zwei Kupplungszustände auf, nämlich einen Öffnungszustand, in dem sich der Dichtkolben in seiner Durchlassposition befindet und ein Fließen des Fluidstroms möglich ist sowie einen Schließzustand, in der sich der Dichtkolben in seiner Dichtposition befindet und der Fluidstrom unterbrochen ist. Die erfindungsgemäße Kupplungsvorrichtung ist weiterhin dadurch gekennzeichnet, dass an dem Dichtkolben vorzugsweise kopfseitig ein insbesondere scheibenförmiges oder ringförmiges erstes Dichtelement, insbesondere zum Abdichten in der Dichtposition angeordnet ist. Da der Dichtkolben eine Längserstreckung (in Richtung des Fluidstroms) aufweist, verfügt er auch über zwei Enden, nämlich ein Kopfende und ein gegenüberliegendes Fußende. Am (äußeren, flächenförmigen) Kopfende des Dichtkolbens ist kopfseitig das erste Dichtelement vorgesehen. Durch die kopfseitige Anordnung des ersten Dichtelementes an dem Dichtkolben ergeben sich hierbei verschiedene Vorteile. So ermöglicht diese Positionierung die Zugänglichkeit des ersten Dichtelementes durch die Öffnung einer Kupplungsaufnahme, wodurch das erste Dichtelement auch im montierten Zustand Kupplungsvorrichtung zugänglich und ggf. austauschbar ist. Außerdem tritt das erste Dichtelement nur dann mit anderen Bauteiloberflächen der Kupplungsvorrichtung in Kontakt, sofern sich der Dichtkolben in seiner Dichtposition befindet. Insbesondere besteht kein Kontakt zu anderen Bauteiloberflächen der Kupplungsvorrichtung während sich der Dichtkolben von seiner Dichtposition in seine Durchlassposition bewegt oder umgekehrt. Der Verschleiß des kopfseitig angeordneten ersten Dichtelements wird folglich minimiert und die Lebensdauer erhöht, was zu einer Reduktion des Wartungsaufwandes sowie der Betriebskosten führt. Außerdem kann der Austausch des ersten Dichtelementes besonders einfach und leicht erfolgen.

Erfindungsgemäß kann es vorgesehen sein, dass es sich mindestens bei der ersten Kupplungsaufnahme, der zweiten Kupplungsaufnahme, dem Dichtkolben sowie dem ersten Dichtelement um rotationssymmetrische Bauteile handelt, die vorzugsweise als Drehteile ausgestaltet (bzw. gefertigt) sind. Andere Querschnittsformen wie Vierecke oder auch vieleckige Querschnitte sind ebenfalls denkbar. Bevorzugt kann dabei vorgesehen sein, dass mindestens die erste Kupplungsaufnahme, die zweite Kupplungsaufnahme der Dichtkolben sowie das erste Dichtelement die gleiche oder im Wesentlichen gleiche Querschnittsform aufweisen.

Ebenfalls umfasst die vorliegende Erfindung, dass das erste Dichtelement auf der stromaufliegenden Seite des Dichtkolbens vorzugsweise kopfseitig an dem Dichtkolben angeordnet ist. Hieraus ergibt sich der Vorteil, dass der Fluidstrom Druck auf das erste Dichtelement ausübt und somit insbesondere in der Dichtposition des Dichtkolbens eine besonders gute Dichtwirkung erzielt werden kann. Ferner kann das erste Dichtelement hierbei gut gegen den anströmenden Fluidstrom (insbesondere durch den Einsatz eines Dichttellers) geschützt werden.

In einer die Erfindung verbessernden Maßnahme kann vorgesehen sein, dass der Dichtkolben federbelastet ist. Hierbei kann sich der Dichtkolben bevorzugt, wenn das zweite fluidführende Bauteil mit der zweiten Kupplungsaufnahme verbunden ist, in seiner Durchlassposition befinden. Wird das zweite fluidführende Bauteil hingegen von der Kupplungsvorrichtung entfernt, so wird der Dichtkolben aufgrund der Federbelastung (automatisch) von seiner Durchlassposition in seine Dichtposition bewegt. In seiner Dichtposition sorgt der Dichtkolben dann dafür, dass der Fluidstrom von dem ersten fluidführenden Bauteil in die Kupplungsvorrichtung unterbrochen wird. Hieraus ergibt sich der Vorteil, dass das zweite fluidführende Bauteil von der Kupplungsvorrichtung entfernt werden kann, ohne dass es zu einem unkontrollierten Austritt des Fluids aus der Kupplungsvorrichtung kommt.

Erfindungsgemäß kann vorgesehen sein, dass die Federbelastung des Dichtkolbens durch eine Druckfeder, insbesondere eine als Druckfeder ausgeführte Spiralfeder, realisiert ist, welche vorteilhafterweise an dem Dichtkolben angeordnet ist und eine Federkraft auf diesen überträgt. Insbesondere können Dichtkolben und Druckfeder hierbei koaxial angeordnet sein. Hierdurch wird der Vorteil einer möglichst einfachen und zugleich eindeutigen Anordnung der Feder realisiert, was die Montage vereinfacht und Montagefehler verhindert. Erfindungsgemäß ist es denkbar, dass die Feder aus einem korrosionsbeständigen Metall, bevorzugt aus Edelstahl, besonders bevorzugt aus verzinktem Stahl gefertigt ist. Hierdurch ergibt sich der Vorteil, dass die Feder in direktem Kontakt mit dem durch die Kupplungsvorrichtung transportierten Fluid stehen kann, ohne in ihrer Funktion hierdurch beeinträchtigt zu werden. Entsprechend wird die korrekte Funktionsweise der Kupplungsvorrichtung über einen langen Zeitraum gesichert und der Wartungsaufwand reduziert. Denkbar ist weiterhin die Verwendung mehrerer Druckfedern, welche insbesondere gleichmäßig über den Umfang des Dichtkolbens verteilt werden. Die Federkraft wird bevorzugt über einen insbesondere radial exponierten Formabschnitt des Dichtkolbens auf diesen übertragen. Denkbar ist auch, dass der radial exponierte Formabschnitt des Dichtkolbens insbesondere durch ein zusätzliches Bauteil, bevorzugt durch einen Druckring, welcher besonders bevorzugt an dem Dichtkolben angeordnet ist, gebildet wird. Weiterhin ist es denkbar, dass die zur Kraftübertragung auf den Dichtkolben erforderliche Abstützung der Druckfeder auf einem Formabschnitt einer Kupplungsaufnahme, bevorzugt der ersten Kupplungsaufnahme, erfolgt.

Weiterhin kann ein Vorteil der Erfindung sein, dass wenn der Dichtkolben sich in der Dichtposition befindet, das erste Dichtelement mit einem Dichtungsabschnitt einer Kupplungsaufnahme, insbesondere der ersten Kupplungsaufnahme, in Kontakt steht und einen Fluidstrom von dem ersten fluidführenden Bauteil in das zweite fluidführende Bauteil unterbunden wird, wobei der Dichtungsabschnitt vorzugsweise auf einem axial ausgerichteten Formabschnitt einer Kupplungsaufnahme, insbesondere der ersten Kupplungsaufnahme positioniert ist. Mit einer axialen Ausrichtung ist hierbei gemeint, dass der Normalenvektor dieses Formabschnitts entlang oder im Wesentlichen entlang der Mittelachse, insbesondere der Rotationsachse der Kupplungsvorrichtung weist.

Vorgesehen ist ferner, dass das erste Dichtelement an einem insbesondere rotationssymmetrischen, vorzugsweise scheibenförmigen Dichtteller angeordnet ist und der Dichtteller formschlüssig und/oder kraftschlüssig, insbesondere in einer mit dem Dichtkolben koaxialen Position, mit dem Dichtkolben verbunden ist. In einer bevorzugten Ausführungsform ist das erste Dichtelement zwischen Dichtteller und Dichtkolben angeordnet. Insbesondere ist es denkbar, dass das erste Dichtelement an einer stromab weisenden Außenfläche des Dichttellers angeordnet ist. Mit stromab weisend ist hierbei gemeint, dass der Normalenvektor dieser Fläche entlang oder im Wesentlichen entlang der Strömungsrichtung des Fluidstroms weist, welcher durch die Kupplungsvorrichtung hindurchfließt. Hierdurch ergibt sich eine besonders Vorteilhafte Art der Fixierung des ersten Dichtelementes am Dichtkolben, da der Dichtteller den zur sicheren Fixierung des ersten Dichtelementes notwendigen Druck auf einen großen Flächenanteil des ersten Dichtelementes verteilt. Entsprechend wird das erste Dichtelement großflächig und möglichst homogen belastet. Die Gefahr, dass es durch die Einbringung zu hoher Montagekräfte zu lokalen Belastungsspitzen und bspw. zu einer Ausstanzung, Rissbildung oder sonstigen Beschädigungen am ersten Dichtelement kommt wird hierdurch folglich reduziert. Außerdem schütz der Dichtteller das erste Dichtelement gegen den anfließenden Fluidstrom.

Denkbar ist weiterhin, dass das erste Dichtelement formschlüssig oder im Wesentlichen formschlüssig in einer hierfür vorgesehenen Ausnehmung des Dichttellers, die durch einen Tellerrand gebildet werden kann, aufgenommen ist. Hierdurch wird der Vorteil erzielt, dass die richtige Anordnung des ersten Dichtelementes im Rahmen der Montage der Kupplungsvorrichtung für den ausführenden Fachmann sofort ersichtlich ist. Montagefehler und hierdurch bedingte Probleme im Betrieb der Kupplungsvorrichtung können so effektiv vermieden werden. Außerdem wird das erste Dichtelement bei der Montage bereits positionsfest im Dichtteller gehalten, wodurch der Dichtteller und das erste Dichtelement eine Einheit bilden und die Montage der Kupplungsvorrichtung entsprechend vereinfacht wird. Vorteilhafterweise kann vorgesehen sein, dass das erste Dichtelement mit dem Dichtteller abschließt und mit diesem eine ebene Fläche bildet, welche zumindest teilweise auf dem (Kopfende vom) Dichtkolben zum Aufliegen kommt. Um den Dichtkolben strömungstechnisch zu optimieren, kann die Fläche vom Kopfende auch bogenförmig oder kalottenförmig ausgestaltet sein, wobei bevorzugt zumindest das erste Dichtelement und/oder der Dichtteller geometrisch komplementär zu dieser Fläche ausgeformt ist. Auch ist es im Rahmen der Erfindung denkbar, dass das erste Dichtelement über den Dichtteller hinausragt. Neben einer bevorzugten Ausbildung des Dichttellers als rotationssymmetrisches Bauteil, sind auch andere Querschnittsformen wie ein viereckiger oder ein vieleckiger Querschnitt denkbar. Als besonders bevorzugt ist es anzusehen, wenn der Dichtteller und/oder die Ausnehmung im Dichtteller zur Aufnahme des ersten Dichtelementes die gleiche oder im wesentlichen gleiche Querschnittsart aufweist wie das erste Dichtelement.

Als vorteilhafte Weiterbildung der Erfindung kann weiterhin vorgesehen sein, dass der Dichtkolben über ein Befestigungsmittel, insbesondere ein Außengewinde, verfügt und der Dichtteller über ein Gegenbefestigungsmittel, insbesondere ein Innengewinde, verfügt und die Verbindung zwischen Dichtkolben und Dichtteller durch das Zusammenwirken von Befestigungsmittel und Gegenbefestigungsmittel zur Anordnung des ersten Dichtelements auf dem Dichtkolben hergestellt wird. Hierdurch wird der Vorteil erzielt, dass die zur Anordnung des ersten Dichtelementes auf dem Dichtkolben erforderliche Anzahl an Einzelteilen reduziert wird. Entsprechend ergibt sich eine Reduktion des Montage- und Wartungsaufwandes. Bevorzugt erstreckt sich das Außengewinde des Dichtkolbens hierbei orthogonal zu einer Kopfseite des Dichtkolbens. In einer besonders bevorzugten Ausführungsform ist das Außengewinde auf der stromaufliegenden Kopfseite des Dichtkolbens angeordnet. Hierdurch ergibt sich der Vorteil, dass der anliegende Fluidstrom, insbesondere wenn sich der Dichtkolben in seiner Dichtposition befindet, Druck auf den Dichtteller und damit auf das erste Dichtelement ausübt, was die Dichtwirkung des ersten Dichtelements verstärkt. Des Weiteren schließt die Erfindung mit ein, dass das erste Dichtelement über eine besonders bevorzugt mittig oder im Wesentlichen mittig angeordnete Bohrung und/oder Öffnung verfügt, die insbesondere mindestens so groß bemessen ist, dass sich das Außengewinde des Dichtkolbens durch sie hindurch erstrecken kann. Hierbei ist es denkbar, dass zwischen dem Außengewinde des Dichtkolbens und dem ersten Dichtelement eine formschlüssige und/oder kraftschlüssige Verbindung herstellbar ist, sodass das Außengewinde des Dichtkolbens zur Zentrierung des ersten Dichtelementes dient. Hierdurch wird der Vorteil einer eindeutigen und unfehlbaren Positionierung des ersten Dichtelementes erzielt und somit die Montage der Kupplungsvorrichtung vereinfacht. Ebenfalls ist es denkbar, dass an dem ersten Dichtelement ein eigenes Gegenbefestigungsmittel, insbesondere ein Innengewinde, ausgebildet ist und das erste Dichtelement über das Außengewinde des Dichtkolbens unmittelbar an diesem befestigt werden kann. Ebenfalls umfasst die Erfindung, dass der Dichtteller anstelle eines Innengewindes lediglich eine insbesondere mittig oder im Wesentlichen mittig angeordnete Bohrung verfügt, die bevorzugt mindestens so groß bemessen ist, dass sich das Außengewinde des Dichtkolbens durch sie hindurch erstrecken kann. Hierbei ist es denkbar, dass zwischen dem Außengewinde des Dichtkolbens und dem ersten Dichtelement eine formschlüssige und/oder kraftschlüssige Verbindung herstellbar ist, sodass das Außengewinde des Dichtkolbens zur Zentrierung des Dichttellers dient. Hierdurch wird der Vorteil einer eindeutigen und unfehlbaren Positionierung des Dichttellers erzielt und somit die Montage der Kupplungsvorrichtung vereinfacht. Zudem umfasst die Erfindung den Gedanken, dass die Befestigung von Dichtteller und/oder erstem Dichtelement über ein separates Gegenbefestigungsmittel, insbesondere eine Mutter, besonders bevorzugt eine Sechskantmutter, erfolgt.

Weiterhin ist vorgesehen, dass an dem Dichtteller ein Werkzeugansatz, insbesondere ein Außensechskant ausgebildet ist, wobei dieser Werkzeugansatz zumindest teilweise in Kraftschluss und/oder Formschluss mit einem Werkzeug bringbar ist. Andere Werkzeugansätze wie ein Innensechskant, Torx oder Kreuzschlitz sind ebenfalls denkbar. Der Werkzeugansatz dient hierbei zum Einbringen einer Montagebewegung in den Dichtteller, durch die eine Verbindung zwischen Dichtteller und Dichtkolben hergestellt und/oder gelöst werden kann. Bevorzugt handelt es sich bei der Montagebewegung um eine rotatorische Bewegung. Als ebenfalls bevorzugt ist es anzusehen, wenn der Werkzeugansatz mittig oder im Wesentlichen mittig an dem Dichtteller angeordnet ist. Besonders bevorzugt ist der Werkzeugansatz derart an dem Dichtteller angeordnet, dass die Mittelachse, insbesondere die Rotationsachse der Kupplungseinrichtung mittig, insbesondere symmetrisch, durch den Werkzeugansatz verläuft und/oder besonders bevorzugt koaxial mit der Rotationsachse des Werkzeugansatzes angeordnet ist. Der Vorteil eines Werkzeugansatzes liegt darin, dass eine Verbindung zwischen Dichtteller und Dichtkolben aufgrund einer optimalen Krafteinbringung besonders einfach hergestellt und wieder gelöst werden kann. Außerdem wird durch den Werkzeugansatz die Zugänglichkeit zur Montage und Demontage des Dichttellers und/oder dem ersten Dichtelements erheblich verbessert, da das Montagewerkzeug durch eine Kupplungsaufnahme hindurchgeführt und direkt mit dem Werkzeugansatz in Wirkverbindung gebracht werden kann. Entsprechend ist eine Demontage des Dichttellers und/oder des ersten Dichtelementes auch im montierten Zustand der Kupplungsvorrichtung ermöglicht. Ebenfalls erlaubt eine Werkzeugschnittstelle den Einsatz von Spezialwerkzeugen wie bspw. Drehmomentschlüssel. Hierdurch kann die zur Fixierung des ersten Dichtelementes aufgebrachte Montagekraft entsprechend genau dosiert werden, sodass eine Zerstörung des ersten Dichtelementes aufgrund zu hoher Krafteinwirkung im Rahmen der Montage verhindert wird. Im Rahmen der Erfindung ist es ebenfalls denkbar, dass der Werkzeugansatz an dem ersten Dichtelement ausgebildet ist.

Bei einer solchen Ausführungsform gelten alle im Hinblick auf eine Kombination von Dichtteller und Werkzeugansatz genannten Merkmale gleichermaßen für eine Kombination aus erstem Dichtelement und Werkzeugansatz.

Vorteilhafterweise kann an dem Dichtteller ein Überstand (auch Tellerrand genannt) ausgebildet sein, welcher im Schließzustand der Kupplungsvorrichtung in eine formschlüssige Verbindung mit einer Ausnehmung in einer Kupplungsaufnahme, insbesondere der ersten Kupplungsaufnahme bringbar ist. Als besonders bevorzugt ist hierbei anzusehen, wenn der Überstand des Dichttellers derart ausgeführt ist, dass er das erste Dichtelement insbesondere vollständig einfasst und somit eine Aufnahme für das erste Dichtelement in dem Dichtteller ausbildet. Als ebenfalls bevorzugt ist es anzusehen, wenn der Überstand des Dichttellers insbesondere in axialer Richtung mit dem ersten Dichtelement abschließt und nicht über das erste Dichtelement hinaussteht. Als axiale Richtung wird hierbei der Richtungsvektor entlang oder im Wesentlichen entlang der Mittelachse, insbesondere der Rotationsachse der Kupplungsvorrichtung definiert. Hierdurch wird der Vorteil erzielt, dass eine sichere Aufnahme des ersten Dichtelementes im dem Dichtteller realisiert wird. Unerwünschte Positionsänderungen des ersten Dichtelements im Betrieb können somit vermieden werden. Außerdem wird die Montage der Kupplungsvorrichtung erheblich vereinfacht und die Fehleranfälligkeit im Montageprozess reduziert. Gleichzeitig wird sichergestellt, dass die Dichtwirkung des ersten Dichtelementes auch dann erhalten bleibt, wenn das erste Dichtelement aufgrund der Krafteinwirkung durch den Fluidstrom insbesondere in seiner Dichtposition gestaucht wird. Durch die Ausnehmung in der Kupplungsaufnahme, welche mit dem Überstand des Dichttellers in Formschluss bringbar ist, wird gewährleistet, dass das erste Dichtelement auch unter Krafteinwirkung und etwaiger Verformung, insbesondere Stauchung, stets mit dem Dichtungsabschnitt der Kupplungsvorrichtung in Kontakt bleibt, wodurch eine hohe Dichtwirkung stets gewährleistet bleibt.

Auch eine insbesondere in Umfangsrichtung unvollständige Einfassung des ersten Dichtelements ist im Rahmen der Erfindung denkbar. Ebenfalls ist es denkbar, dass der Überstand mit wenigstens zwei Unterbrechungen ausgebildet ist und somit aus wenigstens zwei Überstandelementen besteht, wobei die Überstandelemente insbesondere gleichmäßig über den Umfang des Dichttellers verteilt angeordnet sind. Auch eine ungleichmäßige Anordnung der Überstandelemente ist denkbar. Bevorzugt ist die Anordnung der Überstandelemente so gewählt, dass ein herausfallen des ersten Dichtelementes aus dem Dichtteller, insbesondere in radialer Richtung, verhindert wird.

Weiterhin kann ein Vorteil der Erfindung sein, dass der Dichtkolben für seine Bewegung beweglich an einer Lagerstelle, insbesondere in der ersten Kupplungsaufnahme, gelagert ist, wobei vorzugsweise an der Lagerstelle wenigstens ein Gleitring, besonders bevorzugt zwei Gleitringe angeordnet sind. Durch die Verwendung von Gleitringen ergibt sich der Vorteil einer besonders leichtgängigen und verschleißarmen Bewegung des Dichtkolbens. Weiterhin ist es denkbar, dass es sich bei der Bewegung des Dichtkolbens zwischen seiner Durchlassposition und seiner Dichtposition vorzugsweise um eine rein translatorische Bewegung handelt. Hierdurch ergibt sich der Vorteil einer möglichst direkten Bewegung des Dichtkolbens zwischen seiner Dichtposition und seiner Durchlassposition. Ebenfalls denkbar ist es allerdings, dass es sich bei der Bewegung um eine rein rotatorische Bewegung oder um eine Kombination aus translatorischer und rotatorischer Bewegung handelt.

Weiterhin kann ein Vorteil der Erfindung sein, dass der Dichtkolben über wenigstens zwei, vorzugsweise gleichmäßig über den Umfang verteilte Öffnungen verfügt, die sich insbesondere in Umfangsrichtung des Dichtkolbens länglich erstrecken und die einen Fluidstrom von einem Außenbereich des Dichtkolbens in einen Innenraum des Dichtkolbens oder umgekehrt ermöglichen, wobei die Öffnungen vorzugsweise nahe einer Kopfseite des Dichtkolbens, insbesondere an derjenigen Kopfseite des Dichtkolbens an der auch das erste Dichtelement angeordnet ist, besonders bevorzugt nahe des ersten Dichtelements angeordnet sind. Als Umfangsrichtung ist hierbei die Richtung entlang oder im Wesentlichen entlang eines Vektors zu verstehen, der bei einer abgewickelten Darstellung des Dichtkolbens oder einer Schnittansicht des Dichtkolbens orthogonal auf der Mittelachse, insbesondere der Rotationsachse des Dichtkolbens steht. Durch eine möglichst nahe Anordnung der Öffnungen an einer Kopfseite des Dichtkolbens kann der erforderliche Bewegungsspielraum des Dichtkolbens um ihn von seiner Durchlassposition in seine Dichtposition oder umgekehrt zu bringen reduziert werden, was hinsichtlich des erforderlichen Bauraums eine möglichst kompakte Ausführung der Kupplungsvorrichtung ermöglicht. Durch eine gleichmäßige Anordnung der Öffnungen über den Umfang des Dichtkolbens ergibt sich der Vorteil einer gleichmäßigen Strömung von einem Außenbereich des Dichtkolbens in einen Innenraum des Dichtkolbens oder umgekehrt. Dies führt zu einer homogenen Belastung des Dichtkolbens bzw. der Kupplungsvorrichtung und trägt weiterhin zu einem möglichst homogenen Strömungsbild bei, um instationäre Strömungsphänomene und hierdurch verursachte Schallemissionen bestmöglich zu vermeiden. Im Rahmen der Erfindung ist es ebenfalls denkbar, dass die Öffnungen in dem Dichtkolben einen kreisrunden, viereckigen oder anderweitig gearteten Querschnitt haben.

Als vorteilhafte Weiterbildung der Erfindung kann weiterhin vorgesehen sein, dass die erste Kupplungsaufnahme und die zweite Kupplungsaufnahme formschlüssig und/oder kraftschlüssig, insbesondere reversibel, vorzugsweise durch eine Schraubverbindung miteinander verbunden sind. Vorzugsweise ist es hierzu vorgesehen, dass an der ersten Kupplungsaufnahme ein Befestigungsmittel in Form eines Außengewindes ausgebildet ist und an der zweiten Kupplungsaufnahme ein Gegenbefestigungsmittel in Form eines Innengewindes ausgebildet ist und die Verbindung zwischen erster Kupplungsaufnahme und zweiter Kupplungsaufnahme durch das Zusammenwirken von Befestigungsmittel und Gegenbefestigungsmittel hergestellt wird. Ebenfalls ist es denkbar, dass an der ersten Kupplungsaufnahme ein Innengewinde als Befestigungsmittel ausgebildet ist und an der zweiten Kupplungsaufnahme ein Außengewinde als Gegenbefestigungsmittel ausgebildet ist. Durch eine insbesondere reversible Verbindung der ersten und zweiten Kupplungsaufnahme wird der Vorteil erzielt, dass sich die beiden Bauteile zu einer gemeinsamen Baugruppe zusammenfügen lassen und als solche im Betrieb möglichst einfach handhaben. Gleichzeitig kann die Verbindung der beiden Bauteile zerstörungsfrei getrennt werden, was den Austausch defekter Einzelteile erlaubt anstatt ganze Baugruppen ersetzen zu müssen und sich somit positiv auf die Wirtschaftlichkeit der Kupplungsvorrichtung im laufenden Betrieb auswirkt. Der Vorteil einer Schraubverbindung ist weiterhin, dass es sich um eine besonders einfach zu montierende und demontierende Verbindung handelt die sich weiterhin gut für den kombinierten Einsatz von Dichtmitteln eignet, um eine Leckage an der Verbindungsstelle zwischen erster und zweiter Kupplungsaufnahme zu verhindern.

Eine weitere vorteilhafte Weiterbildung der Erfindung kann dadurch gegeben sein, dass in einem Spalt zwischen der ersten Kupplungsaufnahme und der zweiten Kupplungsaufnahme zur Unterbindung eines Leckagestroms ein insbesondere radial positioniertes zweites Dichtelement angeordnet ist, welches sich vorzugsweise über den vollständigen Umfang des Spaltes erstreckt.

Weiterhin kann ein Vorteil der Erfindung sein, dass an der ersten Kupplungsaufnahme, vorzugsweise an der Innenseite ein insbesondere radial positioniertes drittes Dichtelement angeordnet ist, welches zur Abdichtung eines Spaltes zwischen dem ersten fluidführenden Bauteil und der ersten Kupplungsaufnahme dient, sofern das erste fluidführende Bauteil mit der ersten Kupplungsaufnahme verbunden ist.

Als vorteilhafte Weiterbildung der Erfindung kann weiterhin vorgesehen sein, dass an der zweiten Kupplungsaufnahme, vorzugsweise an der Innenseite ein insbesondere radial positioniertes viertes Dichtelement angeordnet ist, welches zur Abdichtung eines Spaltes zwischen dem zweiten fluidführenden Bauteil und der zweiten Kupplungsaufnahme dient, sofern das zweite fluidführende Bauteil mit der Kupplungsvorrichtung verbunden ist.

Durch die voranstehend genannten Weiterbildungen der Erfindung wird der Vorteil erzielt, dass der an der Kupplungsvorrichtung anliegende Fluidstrom ohne Leckage von dem ersten fluidführenden Bauteil in das zweite fluidführende Bauteil geleitet werden kann. Entsprechend werden Umwelteinflüsse durch austretendes Fluid vermieden. Außerdem wird ein Druckverlust, welcher sich Nachteilig auf den ggf. erforderlichen Förderdruck des Fluids auswirken kann, vermieden.

Im Rahmen der Erfindung ist es weiterhin denkbar, dass das erste und/oder zweite und/oder dritte und/oder vierte Dichtelement zumindest teilweise, insbesondere vollständig aus einem Kunststoff, vorzugsweise aus Polytetrafluorethylen (PTFE) hergestellt ist, wodurch sich der Vorteil einer besonders guten Dichtwirkung und Langlebigkeit des ersten und/oder zweiten und/oder dritten und/oder vierten Dichtelementes ergibt.

Eine vorteilhafte Weiterbilderdung der Erfindung kann weiterhin darin liegen, dass der Dichtkolben und/oder die erste Kupplungsaufnahme und/oder die zweite Kupplungsaufnahme aus einem korrosionsbeständigen Material, vorzugsweise aus Edelstahl, besonders bevorzugt aus vernickeltem Messing, gefertigt ist.

Zudem wird die obenstehende Aufgabe durch ein Kupplungssystem gelöst, welches eine erfindungsgemäße Kupplungsvorrichtung sowie ein erstes fluidführendes Bauteil, vorzugsweise ein Rohr oder ein Schlauch, und ein zweites fluidführendes Bauteil, vorzugsweise ein Rohr oder ein Schlauch, umfasst, wobei die die Verbindung zwischen der ersten Kupplungsaufnahme der Kupplungsvorrichtung und dem ersten fluidführenden Bauteil reversibel, vorzugsweise formschlüssig und/oder kraftschlüssig, besonders bevorzugt als Schraubverbindung oder Rastverbindung ausgebildet ist und/oder die Verbindung zwischen der zweiten Kupplungsaufnahme der Kupplungsvorrichtung und dem zweiten fluidführenden Bauteil reversibel, vorzugsweise formschlüssig oder kraftschlüssig, besonders bevorzugt als Bajonettversschluss ausgebildet ist. Hierdurch ergibt sich der Vorteil, dass das zweite fluidführende Bauteil einfach und flexibel von der Kupplungsvorrichtung gelöst werden kann. Der am ersten fluidführenden Bauteil anliegende Fluidstrom wird daraufhin von der erfindungsgemäßen Kupplungsvorrichtung unterbrochen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine Schnittansicht einer Kupplungsvorrichtung,
- Fig. 2: eine Schnittansicht einer Ausführungsform des Dichtkolbens mit dem ersten Dichtelement und Dichtteller in Explosionsdarstellung,
- Fig. 3: eine Schnittansicht des Dichtkolbens mit erstem Dichtelement und Dichtteller in montiertem Zustand,
- Fig 4: eine Schnittansicht eines erfindungsgemäßen Kupplungssystems, wobei sich die Kupplungsvorrichtung im Öffnungszustand befindet, und
- Fig 5: eine Schnittansicht eines erfindungsgemäßen Kupplungssystems, wobei sich die Kupplungsvorrichtung im Schließzustand befindet.

In den nachfolgenden Figuren werden für die gleichen technischen Merkmale auch von unterschiedlichen Ausführungsbeispielen die identischen Bezugszeichen verwendet.

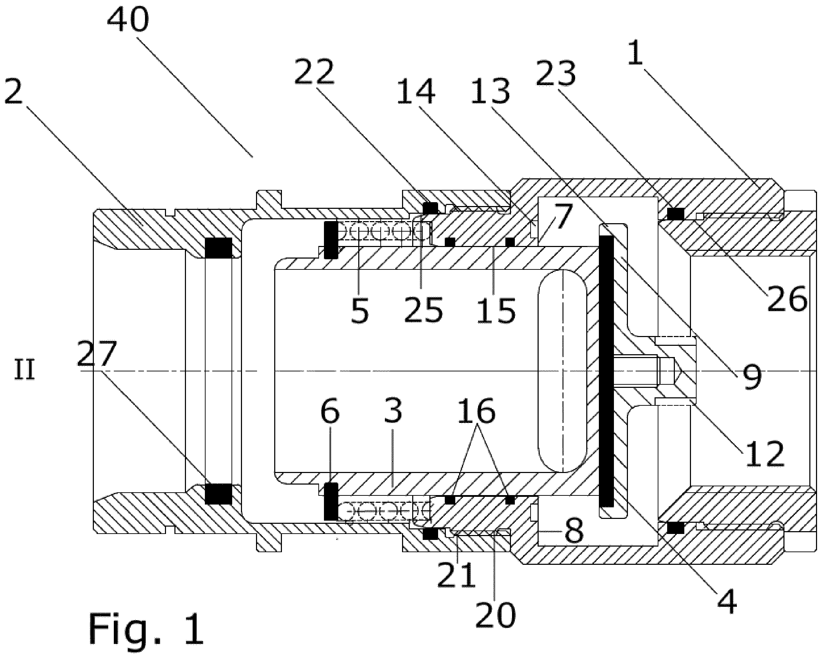

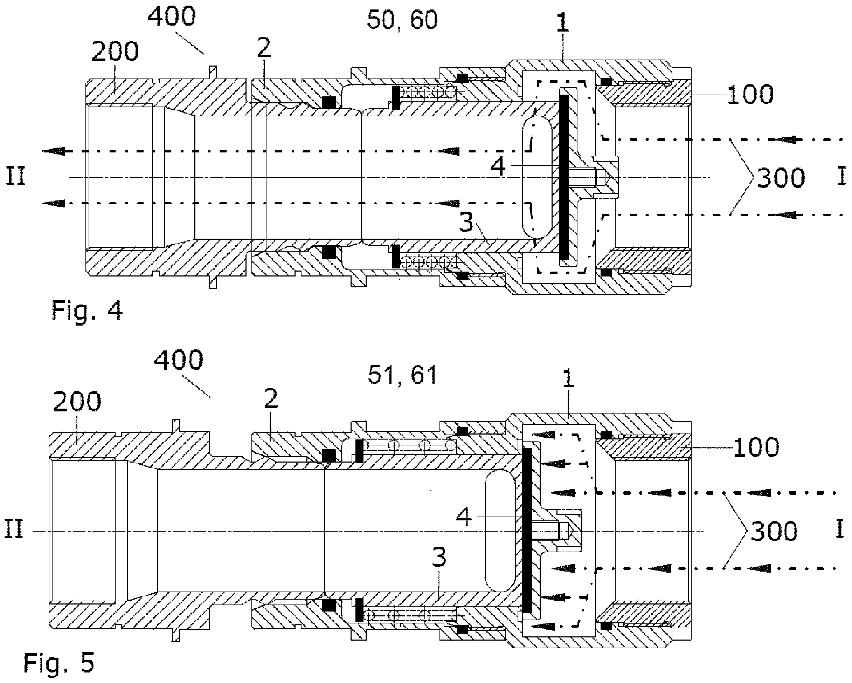

In Fig. 1 ist eine erfindungsgemäße Kupplungsvorrichtung 40 zur Verbindung zweier fluidführender Bauteile 100, 200, insbesondere Rohre oder Schläuche, für die Herstellung eines Fluidstroms 300 dargestellt, welche eine erste Kupplungsaufnahme 1, eine zweite Kupplungsaufnahme 2 sowie einen Dichtkolben 3 umfasst, wobei die Kupplungsvorrichtung 40 mit der ersten Kupplungsaufnahme 1 mit dem ersten fluidführenden Bauteil 100 verbindbar ist und mit der zweiten Kupplungsaufnahme 2 mit dem zweiten fluidführenden Bauteil 200 verbindbar ist. In der Darstellung gemäß Fig. 1 befindet sich der Dichtkolben in seiner Durchlassposition 60 und die Kupplungsvorrichtung 40 befindet sich entsprechend in ihrem Öffnungszustand 50. Die Bezugszeichen I und II zeigen die beiden Positionen "stromauf" (- I) und "stromab" (- II) an, siehe auch Fig. 4 und 5, wobei die Richtung des Stromflusses vom Fluidstroms 300 durch entsprechende Pfeile angedeutet ist.

An dem Dichtkolben 3 ist kopfseitig ein scheibenförmiges erstes Dichtelement 4 angeordnet, welches zum abdichten dient, wenn sich der Dichtkolben 3 in seiner Dichtposition 61 befindet In dem ersten Dichtelement ist mittig eine Bohrung vorgesehen, weshalb es auch als ringförmig bezeichnet werden kann. Bei der ersten Kupplungsaufnahme 1, der zweiten Kupplungsaufnahme 2, dem Dichtkolben 3 und dem ersten Dichtelement 4 handelt es sich um rotationssymmetrische Bauteile. Wie bereits erwähnt, kann eine Kopfseite 28 vom Dichtkolben 3 sowie das erste Dichtelement 4 auch bogenförmig oder kalottenförmig ausgestaltet sein.

Der Dichtkolben 3 ist federbelastet, wobei die Federbelastung des Dichtkolbens durch eine Druckfeder 5 realisiert ist, welche als Spiralfeder 5 ausgeführt ist. Diese Spiralfeder 5 überträgt eine Federkraft auf den Dichtkolben 3 und ist koaxial mit dem Dichtkolben an diesem angeordnet. Die Federkraft der Druckfeder 5 wird über einen radial exponierten Formabschnitt 6 des Dichtkolbens auf den Dichtkolben übertragen, wobei dieser radial exponierte Formabschnitt 6 des Dichtkolbens 3 durch einen Druckring 6 ausgebildet wird, welcher an dem Dichtkolben 3 angeordnet ist. Die zur Kraftübertragung auf den Dichtkolben 3 erforderliche Abstützung der Druckfeder 5 erfolgt auf einem Formabschnitt der ersten Kupplungsaufnahme 1.

Wenn sich der Dichtkolben 3 in seiner Dichtposition 61 befindet, steht das erste Dichtelement 4 mit einem Dichtabschnitt 7 der ersten Kupplungsaufnahme 1 in Kontakt und ein Fluidstrom 300 von dem ersten fluidführenden Bauteil 100 in das zweite fluidführende Bauteil 200 und/oder in den Innenraum 19 des Dichtkolbens 3 wird unterbunden, wobei der Dichtungsabschnitt 7 auf einem axial ausgerichteten Formabschnitt 8 der ersten Kupplungsaufnahme positioniert ist.

Das erste Dichtelement 4 ist an einem rotationssymmetrischen Dichtteller 9 angeordnet, wobei dieser Dichtteller 9 in einer mit dem Dichtkolben 3 koaxialen Position mit dem Dichtkolben 3 verbunden ist. Das erste Dichtelement 4 ist hierbei formschlüssig in dem Dichtteller 9 aufgenommen und schließt mit diesem ab, wodurch Dichtteller 9 und erstes Dichtelement 4 eine ebene Fläche bilden, welche teilweise auf dem Dichtkolben 3 zum Aufliegen kommt.

An dem Dichtteller 9 ist ein Werkzeugansatz 12 in Form eines Außensechskants ausgebildet, welcher zumindest teilweise in Formschluss mit einem Werkzeug bringbar ist und zum Einbringen einer Montagebewegung in den Dichtteller 9, durch die eine Verbindung zwischen Dichtteller 9 und Dichtkolben 3 hergestellt und/oder gelöst werden kann, wobei es sich bei der Montagebewegung um eine rotatorische Bewegung handelt. Der Werkzeugansatz 12 ist mittig an dem Dichtteller 9 derart angeordnet, dass die Rotationsachse der Kupplungseinrichtung durch den Mittelpunkt des Werkzeugansatzes 12 verläuft und koaxial mit der Rotationsachse des Werkzeugansatzes 12 angeordnet ist.

An dem Dichtteller 9 ist ein Überstand 13 (auch Tellerrand genannt) ausgebildet, welcher im Schließzustand 51 der Kupplungsvorrichtung in eine formschlüssige Verbindung mit einer Ausnehmung 14 in der ersten Kupplungsaufnahme bringbar ist. Der Überstand 13 des Dichttellers 9 ist hierbei derart ausgebildet, dass er das erste Dichtelement 4 vollständig einfasst und somit eine Aufnahme für das erste Dichtelement 4 in dem Dichtteller 9 ausbildet. Der Überstand 13 des Dichttellers 9 schließt in axialer Richtung mit dem Dichtelement 4 ab und steht nicht über das erste Dichtelement 4 hinaus.

Der Dichtkolben 3 ist an einer Lagerstelle 15 in der ersten Kupplungsaufnahme 1 beweglich gelagert, wobei an der Lagerstelle 15 zwei Gleitringe 16 angeordnet sind. Bei der Bewegung des Dichtkolbens zwischen seiner Durchlassposition 60 und seiner Dichtposition 61 handelt es sich um eine rein translatorische Bewegung.

Die erste Kupplungsaufnahme 1 und die zweite Kupplungsaufnahme 2 sind formschlüssig und/oder kraftschlüssig reversibel durch eine Schraubenverbindung miteinander verbunden. Hierzu ist an der ersten Kupplungsaufnahme 1 ein Befestigungsmittel 20 in Form eines Außengewindes 20 ausgebildet und an der zweiten Kupplungsaufnahme 2 ein Gegenbefestigungsmittel 21 in Form eines Innengewindes 21 ausgebildet und die Verbindung zwischen erster Kupplungsaufnahme 1 und zweiter Kupplungsaufnahme 2 wird durch das Zusammenwirken von Befestigungsmittel 20 und Gegenbefestigungsmittel 21 hergestellt.

In einem Spalt 25 zwischen der ersten Kupplungsaufnahme 1 und der zweiten Kupplungsaufnahme 2 ist zur Unterbindung eines Leckagestroms ein radial positioniertes zweites Dichtelement 22 angeordnet, welches sich über den vollständigen Umfang des Spaltes erstreckt. An der Innenseite der ersten Kupplungsaufnahme 1 ist ein radial positioniertes drittes Dichtelement 23 angeordnet, welches zur Abdichtung eines Spaltes 26 zwischen dem ersten fluidführenden Bauteil 100 und der ersten Kupplungsaufnahme 1 dient, sofern das erste fluidführende Bauteil 100 mit der ersten Kupplungsaufnahme 1 verbunden ist. An der Innenseite der zweiten Kupplungsaufnahme 2 ist ein radial positioniertes viertes Dichtelement 24 angeordnet, welches zur Abdichtung eines Spaltes 27 zwischen dem zweiten fluidführenden Bauteil 200 und der zweiten Kupplungsaufnahme 2 dient, sofern das zweite fluidführende Bauteil 200 mit der zweiten Kupplungsaufnahme 2 verbunden ist.

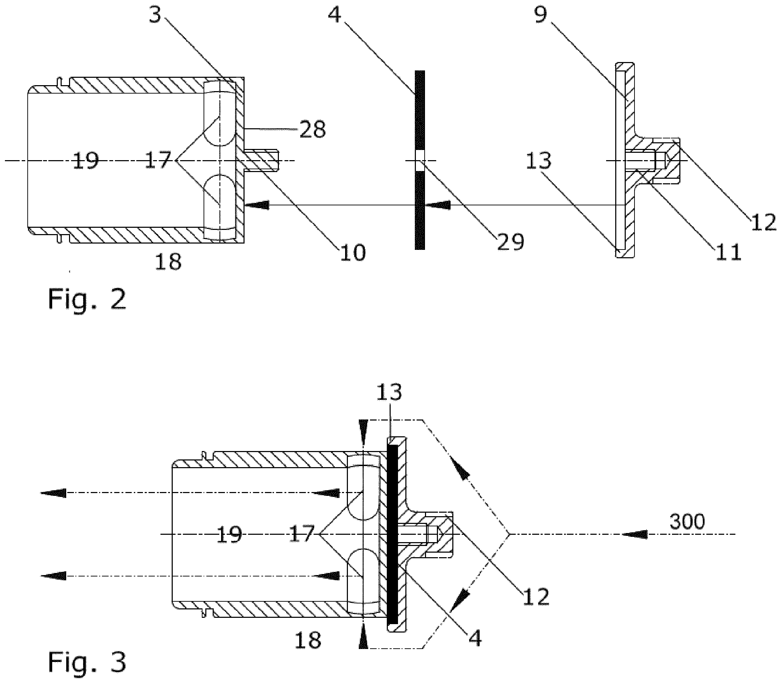

In Fig. 2 und 3 ist ein erfindungsgemäßer Dichtkolben 3 mit einem ersten Dichtelement 4 sowie einem Dichtteller 9 dargestellt, wie er in einer erfindungsgemäßen Kupplungsvorrichtung Verwendung findet. Fig. 2 zeigt die genannten Bauteile in einer Explosionsdarstellung und Fig. 3 zeigt die genannten Bauteile in montiertem Zustand. Der Dichtkolben 3 verfügt über ein Befestigungsmittel 10, welches als Außengewinde ausgebildet ist und der Dichtteller 9 verfügt über ein Gegenbefestigungsmittel 11, welches als Innengewinde ausgebildet ist. Die Verbindung zwischen Dichtkolben 3 und Dichtteller 9 wird durch ein Zusammenwirken von Befestigungsmittel und Gegenbefestigungsmittel hergestellt, wodurch das erste Dichtelement 4, welches in dem Dichtteller 9 formschlüssig aufgenommen ist auf dem Dichtkolben 3 angeordnet und in seiner Position fixiert wird. Das Außengewinde 10 des Dichtkolbens 3 erstreckt sich hierbei orthogonal zu einer Kopfseite 28 des Dichtkolbens 3 und ist auf der stromaufliegenden Kopfseite 2 des Dichtkolbens angeordnet. Das erste Dichtelement 4 verfügt über eine mittig angeordnete Bohrung 29 und/oder Öffnung, die so groß bemessen ist, dass sich das Außengewinde 10 des Dichtkolbens 3 durch sie hindurch erstrecken kann. Weiterhin verfügt der Dichtkolben 3 über wenigstens zwei, vorzugsweise gleichmäßig über den Umfang verteile Öffnungen 17, die sich in Umfangsrichtung des Dichtkolbens 3 länglich erstrecken und die einen Fluidstrom 300 von dem Außenbereich 18 des Dichtkolbens 3 in den Innenraum 19 des Dichtkolbens ermöglichen. Die Öffnungen 17 sind hierbei nahe einer Kopfseite 28 des Dichtkolbens angeordnet, was derjenigen Kopfseite 28 des Dichtkolbens 3 entspricht, an der auch das erste Dichtelement 4 angeordnet ist.

In Fig. 4 und Fig. 5 ist ein erfindungsgemäßes Kupplungssystem 400 dargestellt, welches eine erfindungsgemäße Kupplungsvorrichtung 40 sowie ein erstes fluidführendes Bauteil 100 und ein zweites fluidführendes Bauteil 200 umfasst, wobei eine Verbindung zwischen der ersten Kupplungsaufnahme 1 und dem ersten fluidführenden Bauteil 100 reversibel in Form einer Schraubverbindung ausgebildet ist und die Verbindung zwischen der zweiten Kupplungsaufnahme und dem zweiten fluidführenden Bauteil reversibel als Bajonettverschluss ausgebildet ist. Die Fig. 4 zeigt das Kupplungssystem, wobei sowohl das erste fluidführende Bauteil 100 mit der ersten Kupplungsaufnahme 1 verbunden ist als auch das zweite fluidführende Bauteil 200 mit der zweiten Kupplungsaufnahme 2 verbunden ist. Entsprechend befindet sich die Kupplungsvorrichtung 40 in ihrem Öffnungszustand 50, in welchem sich der Dichtkolben 3 in seiner Durchlassposition 60 befindet und ein Fließen des Fluidstroms 300 möglich ist. Die Fig. 5 zeigt das Kupplungssystem 400, wobei das erste fluidführende Bauteil 100 mit der ersten Kupplungsaufnahme 1 verbunden ist, das zweite fluidführende Bauteil 200 jedoch nicht mit der zweiten Kupplungsaufnahme 2 verbunden ist. Entsprechend befindet sich die Kupplungsvorrichtung 40 in ihrem Schließzustand 51, in welchem sich der Dichtkolben 3 in seiner Dichtposition 61 befindet und der Fluidstrom 300 unterbrochen ist. Es wird somit deutlich, dass wenn das zweite fluidführende Bauteil 200 mit der zweiten Kupplungsaufnahme 2 verbunden ist, der Dichtkolben 3 durch das zweite fluidführende Bauteil 200 entgegen der auf den Dichtkolben einwirkenden Federkraft in seiner Durchlassposition 60 bewegt wird und ein Fließen des Fluidstroms 300 somit möglich ist. Wird das zweite fluidführende Bauteil 200 hingegen von der zweiten Kupplungsaufnahme 2 entfernt, so wird der Dichtkolben 3 aufgrund der anliegenden Federbelastung automatisch in seine Dichtposition 61 bewegt und der Fluidstrom 300 unterbrochen.

### Bezugszeichenliste

- 1: erste Kupplungsaufnahme
- 2: zweite Kupplungsaufnahme
- 3: Dichtkolben
- 4: erstes Dichtelement
- 5: Druckfeder, Spiralfeder
- 6: Radial exponierter Formabschnitt des Dichtkolbens, Druckring
- 7: Dichtungsabschnitt
- 8: axial ausgerichteter Formabschnitt
- 9: Dichtteller
- 10: Befestigungsmittel des Dichtkolbens, Außengewinde
- 11: Gegenbefestigungsmittel des Dichttellers, Innengewinde
- 12: Werkzeugansatz, Außensechskant
- 13: Überstand des Dichttellers / Tellerrand
- 14: Ausnehmung in der ersten Kupplungsaufnahme
- 15: Lagerstelle
- 16: Gleitring
- 17: Öffnung im Dichtkolben
- 18: Außenbereich des Dichtkolbens
- 19: Innenraum des Dichtkolbens
- 20: Befestigungsmittel der ersten Kupplungsaufnahme
- 21: Gegenbefestigungsmittel der zweiten Kupplungsaufnahme
- 22: zweites Dichtelement
- 23: drittes Dichtelement
- 24: viertes Dichtelement
- 25: Spalt
- 26: Spalt
- 27: Spalt
- 28: Kopfseite des Dichtkolbens
- 29: Öffnung im Dichtelement
- 40: Kupplungsvorrichtung

- 50: Öffnungszustand
- 51: Schließzustand

- 60: Durchlassposition
- 61: Dichtposition

- 100: erstes fluidführendes Bauteil
- 200: zweites fluidführendes Bauteil
- 300: Fluidstrom
- 400: Kupplungssystem
- I: stromauf
- II: stromab

## Patentansprüche

1. Kupplungsvorrichtung (40) zur Verbindung zweier fluidführender Bauteile (100, 200), insbesondere Rohre oder Schläuche oder dergleichen, für die Herstellung eines Fluidstroms (300), mindestens umfassend
eine erste Kupplungsaufnahme (1), eine zweite Kupplungsaufnahme (2), sowie einen Dichtkolben (3), wobei die Kupplungsvorrichtung (40) mit der ersten Kupplungsaufnahme (1) mit dem ersten fluidführenden Bauteil (100) verbindbar ist und mit der zweiten Kupplungsaufnahme (2) mit dem zweiten fluidführenden Bauteil (200) verbindbar ist und wobei die Kupplungsvorrichtung (40) mindestens zwei Kupplungszustände (50, 51) aufweist, nämlich einen Öffnungszustand (50), in dem sich der Dichtkolben (3) in seiner Durchlassposition (60) befindet und ein Fließen des Fluidstroms (300) möglich ist, und einen Schließzustand (51), in dem sich der Dichtkolben in seiner Dichtposition (61) befindet und der Fluidstrom unterbrochen ist, wobei
an dem Dichtkolben (3), vorzugsweise kopfseitig, ein insbesondere scheibenförmiges oder ringförmiges Dichtelement (4), insbesondere zum Abdichten in der Dichtposition (61), angeordnet ist, wobei
das Dichtelement (4) an einem Dichtteller (9) angeordnet ist, wobei der Dichtteller (9) formschlüssig und/oder kraftschlüssig mit dem Dichtkolben (3) verbunden ist,
**dadurch gekennzeichnet, dass**
an dem Dichtteller (9) ein Werkzeugansatz (12) ausgebildet ist, wobei dieser Werkzeugansatz (12) zum Einbringen einer Montagebewegung in den Dichtteller (9) zumindest teilweise in Formschluss und/oder Kraftschluss mit einem Werkzeug bringbar ist, wobei durch die Montagebewegung eine Verbindung zwischen Dichtteller (9) und Dichtkolben (3) hergestellt und/oder gelöst werden kann, wobei das Montagewerkzeug durch eine der Kupplungsaufnahmen (1, 2) hindurchführbar ist und wobei eine Demontage des Dichttellers (9) im montierten Zustand der Kupplungsvorrichtung (40) durchführbar ist.

2. Kupplungsvorrichtung (40) nach Anspruch 1,
wobei der Dichtkolben (3) federbelastet ist, und
wobei die Federbelastung des Dichtkolbens (3) durch eine Druckfeder (5), insbesondere eine als Druckfeder ausgeführte Spiralfeder (5), realisiert ist, welche vorzugsweise an dem Dichtkolben (3) angeordnet ist und eine Federkraft auf diesen überträgt,
wobei bevorzugt Dichtkolben (3) und Druckfeder (5) insbesondere koaxial angeordnet sind und/oder wobei bevorzugt die Druckfeder (5) aus einem korrosionsbeständigen Metall, bevorzugt aus Edelstahl, besonders bevorzugt aus verzinktem Stahl gefertigt ist.

3. Kupplungsvorrichtung (40) nach einem der vorhergehenden Ansprüche,
wobei eine Federkraft über einen insbesondere radial exponierten Formabschnitt (6) des Dichtkolbens (3) auf diesen übertragen wird,
wobei vorzugsweise der radial exponierte Formabschnitt (6) des Dichtkolbens insbesondere durch ein zusätzliches Bauteil, bevorzugt durch einen Druckring (6), welcher besonders bevorzugt an dem Dichtkolben angeordnet ist, gebildet wird,
und/oder wobei sich der Dichtkolben (3) wenn das zweite fluidführende Bauteil (200) mit der zweiten Kupplungsaufnahme (2) verbunden ist in seiner Durchlassposition (60) befindet.

4. Kupplungsvorrichtung (40) nach einem der vorhergehenden Ansprüche,
wobei wenn der Dichtkolben (3) sich in der Dichtposition (61) befindet, das Dichtelement (4) mit einem Dichtungsabschnitt (7) der ersten Kupplungsaufnahme (1) in Kontakt steht und einen Fluidstrom (300) von dem ersten fluidführenden Bauteil (100) in das zweite fluidführende Bauteil (200) und/oder in den Innenraum (19) des Dichtkolbens (3) unterbunden wird,
wobei vorzugsweise der Dichtungsabschnitt (7) auf einem axial ausgerichteten Formabschnitt (8) der ersten Kupplungsaufnahme (1) liegt.

5. Kupplungsvorrichtung (40) nach einem der vorhergehenden Ansprüche,
wobei der Dichtkolben (3) über ein Befestigungsmittel (10), insbesondere ein Außengewinde, verfügt und der Dichtteller über ein Gegenbefestigungsmittel (11), insbesondere ein Innengewinde, verfügt und
vorzugsweise die Verbindung zwischen Dichtkolben (3) und Dichtteller (9) durch das Zusammenwirken von Befestigungsmittel (10) und Gegenbefestigungsmittel (11) zur Anordnung des Dichtelements (4) auf dem Dichtkolben (3) hergestellt wird.

6. Kupplungsvorrichtung (40) nach einem der vorhergehenden Ansprüche,
wobei an dem Dichtteller (9) ein Überstand (13) ausgebildet ist,
welcher vorzugsweise im Schließzustand (51) der Kupplungsvorrichtung (40) in eine formschlüssige Verbindung mit einer Ausnehmung (14) in der ersten Kupplungsaufnahme (1) bringbar ist.

7. Kupplungsvorrichtung (40) nach einem der vorhergehenden Ansprüche,
wobei der Dichtkolben (3) für seine Bewegung beweglich an einer Lagerstelle (15), insbesondere in der ersten Kupplungsaufnahme (1), gelagert ist,
wobei vorzugsweise an der Lagerstelle (15) wenigstens ein Gleitring (16) angeordnet ist, besonders bevorzugt zwei Gleitringe (16) angerordnet sind um eine besonders leichtgängige Bewegung des Dichtkolbens (3) zu ermöglichen,
und/oder wobei es sich bei der Bewegung des Dichtkolbens (3) zwischen seiner Durchlassposition (60) und seiner Dichtposition (61) um eine rein translatorische oder rein rotatorische Bewegung oder um eine Kombination aus translatorischer und rotatorischer Bewegung handelt.

8. Kupplungsvorrichtung (40) nach einem der vorhergehenden Ansprüche,
wobei der Dichtkolben über wenigstens zwei, vorzugsweise gleichmäßig, über den Umfang verteilte Öffnungen (17) verfügt, und
insbesondere sich die Öffnungen (17) in Umfangsrichtung des Dichtkolbens (3) erstrecken und die einen Fluidstrom von einem Außenbereich (18) des Dichtkolbens (3) in einen Innenraum (19) des Dichtkolbens (3) oder umgekehrt ermöglichen,
wobei vorzugsweise die Öffnungen (17) nahe einer Kopfseite (28) des Dichtkolbens (3) insbesondere nahe des Dichtelements (4) angeordnet sind.

9. Kupplungsvorrichtung (40) nach einem der vorhergehenden Ansprüche,
wobei die erste Kupplungsaufnahme (1) und die zweite Kupplungsaufnahme (2) formschlüssig und/oder kraftschlüssig, insbesondere reversibel, vorzugsweise durch eine Schraubverbindung, miteinander verbunden sind.

10. Kupplungsvorrichtung (40) nach einem der vorhergehenden Ansprüche,
wobei in einem Spalt (25) zwischen der ersten Kupplungsaufnahme (1) und der zweiten Kupplungsaufnahme (2) zur Unterbindung eines Leckagestroms ein insbesondere radial positioniertes zweites Dichtelement (22) angeordnet ist,
welches sich vorzugsweise über den vollständigen Umfang des Spaltes (25) erstreckt.

11. Kupplungsvorrichtung (40) nach einem der vorhergehenden Ansprüche,
wobei an der ersten Kupplungsaufnahme (1), vorzugsweise an der Innenseite, ein insbesondere radial positioniertes drittes Dichtelement (23) angeordnet ist,
welches vorzugsweise zur Abdichtung eines Spaltes (26) zwischen dem ersten fluidführenden Bauteil (100) und der ersten Kupplungsaufnahme (1) dient, sofern das erste fluidführende Bauteil (100) mit der Kupplungsvorrichtung (40) verbunden ist.

12. Kupplungsvorrichtung (40) nach einem der vorhergehenden Ansprüche,
wobei an der zweiten Kupplungsaufnahme (2), vorzugsweise an der Innenseite, ein insbesondere radial positioniertes viertes Dichtelement (24) angeordnet ist,
welches insbesondere zur Abdichtung eines Spaltes (27) zwischen dem zweiten fluidführenden Bauteil (200) und der zweiten Kupplungsaufnahme (2) dient, sofern das zweite fluidführende Bauteil (200) mit der Kupplungsvorrichtung (40) verbunden ist.

13. Kupplungsvorrichtung (40) nach einem der vorhergehenden Ansprüche,
wobei das erste Dichtelement (4) und/oder das zweite Dichtelement (22) und/oder das dritte Dichtelement (23) und/oder das vierte Dichtelement (24) zumindest teilweise, insbesondere vollständig aus einem Kunststoff, vorzugsweise Polytetrafluorethylen (PTFE), hergestellt ist,
und/oder wobei der Dichtkolben (3) und/oder die erste Kupplungsaufnahme (1) und/oder die zweite Kupplungsaufnahme (1) aus einem korrosionsbeständigen Material gefertigt ist, vorzugsweise aus Edelstahl, besonders bevorzugt aus vernickeltem Messing.

14. Kupplungssystem (400) umfassend eine Kupplungsvorrichtung (1) nach einem der Ansprüche 1 bis 13 sowie ein erstes fluidführendes Bauteil (100) und ein zweites fluidführendes Bauteil (200) ,
wobei die Verbindung zwischen der ersten Kupplungsaufnahme (1) der Kupplungsvorrichtung (1) und dem ersten fluidführenden Bauteil (100) reversibel ausgebildet ist und/oder die Verbindung zwischen der zweiten Kupplungsaufnahme (2) der Kupplungsvorrichtung (1) und dem zweiten fluidführenden Bauteil (200) reversibel ausgebildet ist.

## Claims

1. Coupling device (40) for connecting two fluid-carrying components (100, 200), in particular pipes or hoses or the like, for producing a fluid flow (300), comprising at least a first coupling receptacle (1), a second coupling receptacle (2) and a sealing piston (3), wherein the coupling device (40) can be connected to the first fluid-carrying component (100) by means of the first coupling receptacle (1) and can be connected to the second fluid-carrying component (200) by means of the second coupling receptacle (2), and wherein the coupling device (40) has at least two coupling states (50, 51), namely an open state (50), in which the sealing piston (3) is in its passage position (60) and a flow of the fluid flow (300) is possible, and a closed state (51), in which the sealing piston is in its sealing position (61) and the fluid stream is interrupted, wherein
a sealing element (4), in particular in the form of a disk or ring, is arranged on the sealing piston (3), preferably on the head side, in particular for sealing in the sealing position (61), **wherein**
the sealing element (4) is arranged on a sealing disk (9), the sealing disk (9) being connected to the sealing piston (3) in a form-fitting and/or force-fitting manner, **characterized in that**
a tool attachment (12) is formed on the sealing disk (9), wherein this tool attachment (12) can be brought at least partially into positive locking and/or frictional locking with a tool for introducing an assembly movement into the sealing disk (9), wherein a connection between the sealing disk (9) and the sealing piston (3) can be produced and/or released by the assembly movement, wherein the assembly tool can be guided through one of the coupling receptacles (1, 2) and it is possible to disassemble the sealing disk (9) when the coupling device (40) is assembled.

2. Coupling device (40) according to claim 1,
wherein the sealing piston (3) is spring-loaded, and
wherein the spring loading of the sealing piston (3) is realized by a compression spring (5), in particular a spiral spring (5) designed as a compression spring, which is preferably arranged on the sealing piston (3) and transmits a spring force to the latter,
wherein preferably the sealing piston (3) and the compression spring (5) are arranged in particular coaxially and/or wherein preferably the compression spring (5) is made of a corrosion-resistant metal, preferably of stainless steel, particularly preferably of galvanized steel.

3. Coupling device (40) according to any one of the preceding claims,
wherein a spring force is transmitted to the sealing piston (3) via a particularly radially exposed shaped section (6) of the sealing piston (3),
wherein preferably the radially exposed shaped section (6) of the sealing piston is formed in particular by an additional component, preferably by a pressure ring (6), which is particularly preferably arranged on the sealing piston,
and/or wherein the sealing piston (3) is in its passage position (60) when the second fluid-carrying component (200) is connected to the second coupling receptacle (2).

4. Coupling device (40) according to any one of the preceding claims,
wherein when the sealing piston (3) is in the sealing position (61), the sealing element (4) is in contact with a sealing portion (7) of the first coupling receptacle (1) and a fluid flow (300) from the first fluid-carrying component (100) into the second fluid-carrying component (200) and/or into the interior (19) of the sealing piston (3) is prevented,
wherein preferably the sealing section (7) lies on an axially aligned shaped section (8) of the first coupling receptacle (1).

5. Coupling device (40) according to any one of the preceding claims,
wherein the sealing piston (3) has a fastening means (10), in particular an external thread, and the sealing disk has a counter-fastening means (11), in particular an internal thread, and
preferably, the connection between the sealing piston (3) and the sealing disk (9) is produced by the interaction of fastening means (10) and counter-fastening means (11) for arranging the sealing element (4) on the sealing piston (3).

6. Coupling device (40) according to any one of the preceding claims,
wherein a projection (13) is formed on the sealing disk (9),
which, preferably in the closed state (51) of the coupling device (40), can be brought into a positive-locking connection with a recess (14) in the first coupling receptacle (1).

7. Coupling device (40) according to any one of the preceding claims,
wherein the sealing piston (3) is movably mounted for its movement at a bearing point (15), in particular in the first coupling receptacle (1),
wherein preferably at least one sliding ring (16) is arranged at the bearing point (15), particularly preferably two sliding rings (16) are arranged in order to enable a particularly smooth movement of the sealing piston (3),
and/or wherein the movement of the sealing piston (3) between its passage position (60) and its sealing position (61) is a purely translatory or purely rotatory movement or a combination of translatory and rotatory movement.

8. Coupling device (40) according to any one of the preceding claims,
wherein the sealing piston has at least two openings (17), preferably evenly distributed over the circumference, and
in particular the openings (17) extend in the circumferential direction of the sealing piston (3) and allow a fluid flow from an outer area (18) of the sealing piston (3) into an interior (19) of the sealing piston (3) or vice versa,
wherein the openings (17) are preferably arranged close to a head side (28) of the sealing piston (3), in particular close to the sealing element (4).

9. Coupling device (40) according to any one of the preceding claims,
wherein the first coupling receptacle (1) and the second coupling receptacle (2) are connected to one another in a form-fitting and/or force-fitting manner, in particular reversibly, preferably by means of a screw connection.

10. Coupling device (40) according to any one of the preceding claims,
wherein a second sealing element (22), in particular radially positioned, is arranged in a gap (25) between the first coupling receptacle (1) and the second coupling receptacle (2) to prevent a leakage flow, which preferably extends over the entire circumference of the gap (25).

11. Coupling device (40) according to any one of the preceding claims,
wherein a third sealing element (23), in particular radially positioned, is arranged on the first coupling receptacle (1), preferably on the inside,
which preferably serves to seal a gap (26) between the first fluid-carrying component (100) and the first coupling receptacle (1), provided that the first fluid-carrying component (100) is connected to the coupling device (40).

12. Coupling device (40) according to any one of the preceding claims,
wherein a fourth sealing element (24), in particular radially positioned, is arranged on the second coupling receptacle (2), preferably on the inside,
which serves in particular to seal a gap (27) between the second fluid-carrying component (200) and the second coupling receptacle (2), provided that the second fluid-carrying component (200) is connected to the coupling device (40).

13. Coupling device (40) according to any one of the preceding claims,
wherein the first sealing element (4) and/or the second sealing element (22) and/or the third sealing element (23) and/or the fourth sealing element (24) is made at least partially, in particular completely, from a plastic, preferably polytetrafluoroethylene (PTFE),
and/or wherein the sealing piston (3) and/or the first coupling receptacle (1) and/or the second coupling receptacle (1) is made of a corrosion-resistant material, preferably of stainless steel, particularly preferably of nickel-plated brass.

14. A coupling system (400) comprising a coupling device (1) according to any one of claims 1 to 13 as well as a first fluid-carrying component (100) and a second fluid-carrying component (200),
wherein the connection between the first coupling receptacle (1) of the coupling device (1) and the first fluid-carrying component (100) is designed to be reversible and/or the connection between the second coupling receptacle (2) of the coupling device (1) and the second fluid-carrying component (200) is designed to be reversible.

## Revendications

1. Dispositif d'accouplement (40) pour relier deux composants (100, 200) conduisant un fluide, en particulier des tubes ou des tuyaux flexibles ou similaires, pour la production d'un flux de fluide (300), comprenant au moins
un premier logement d'accouplement (1), un deuxième logement d'accouplement (2), et un piston d'étanchéité (3), le dispositif d'accouplement (40) pouvant être relié par le premier logement d'accouplement (1) au premier composant (100) conduisant le fluide et pouvant être relié par le deuxième logement d'accouplement (2) au deuxième composant (200) conduisant le fluide, et le dispositif d'accouplement (40) présentant au moins deux états d'accouplement (50, 51), à savoir un état d'ouverture (50) dans lequel le piston d'étanchéité (3) se trouve dans sa position de passage (60) et un écoulement du flux de fluide (300) est possible, et un état de fermeture (51) dans lequel le piston d'étanchéité se trouve dans sa position d'étanchéité (61) et le flux de fluide est interrompu, où un élément d'étanchéité (4), en particulier en forme de disque ou d'anneau, est disposé sur le piston d'étanchéité (3), de préférence du côté de la tête, en particulier pour assurer l'étanchéité dans la position d'étanchéité (61), **où**
l'élément d'étanchéité (4) est disposé sur un disque d'étanchéité (9), le disque d'étanchéité (9) étant relié par complémentarité de forme et/ou par force au piston d'étanchéité (3),
**caractérisé en ce qu'**
un appendice d'outil (12) est formé sur le disque d'étanchéité (9), cet appendice d'outil (12) pouvant être amené au moins partiellement en liaison par complémentarité de forme et/ou par adhérence avec un outil pour l'introduction d'un mouvement de montage dans le disque d'étanchéité (9), une liaison entre le disque d'étanchéité (9) et le piston d'étanchéité (3) pouvant être établie et/ou supprimée par le mouvement de montage, où l'outil de montage peut être introduit à travers l'un des logements d'accouplement (1, 2) et un démontage du disque d'étanchéité (9) peut être effectué à l'état monté du dispositif d'accouplement (40).

2. Dispositif d'accouplement (40) selon la revendication 1,
le piston d'étanchéité (3) étant chargé par ressort, et
la charge élastique du piston d'étanchéité (3) étant réalisée par un ressort de compression (5), en particulier un ressort spiral (5) réalisé sous forme de ressort de compression, qui est disposé de préférence sur le piston d'étanchéité (3) et transmet une force élastique à celui-ci,
où de préférence le piston d'étanchéité (3) et le ressort de pression (5) sont disposés en particulier coaxialement et/ou où de préférence le ressort de pression (5) est fabriqué en un métal résistant à la corrosion, de préférence en acier inoxydable, de manière particulièrement préférée en acier galvanisé.

3. Dispositif d'accouplement (40) selon l'une quelconque des revendications précédentes, une force élastique étant transmise au piston d'étanchéité (3) par l'intermédiaire d'une section de forme (6) du piston d'étanchéité exposée en particulier radialement,
de préférence la section de forme (6) exposée radialement du piston d'étanchéité étant formée en particulier par un composant supplémentaire, de préférence par une bague de pression (6), qui est disposée de manière particulièrement préférée sur le piston d'étanchéité,
et/ou dans lequel le piston d'étanchéité (3) se trouve dans sa position de passage (60) lorsque le deuxième composant (200) conduisant le fluide est relié au deuxième logement d'accouplement (2).

4. Dispositif d'accouplement (40) selon l'une quelconque des revendications précédentes, dans lequel, lorsque le piston d'étanchéité (3) se trouve dans la position d'étanchéité (61), l'élément d'étanchéité (4) est en contact avec une section d'étanchéité (7) du premier logement d'accouplement (1) et un écoulement de fluide (300) est empêché depuis le premier composant conduisant le fluide (100) dans le deuxième composant conduisant le fluide (200) et/ou dans l'espace intérieur (19) du piston d'étanchéité (3), de préférence, la section d'étanchéité (7) étant située sur une section de moulage (8) orientée axialement du premier logement d'accouplement (1).

5. Dispositif d'accouplement (40) selon l'une quelconque des revendications précédentes, le piston d'étanchéité (3) disposant d'un moyen de fixation (10), en particulier d'un filetage extérieur, et le disque d'étanchéité disposant d'un moyen de fixation complémentaire (11), en particulier d'un filetage intérieur, et
de préférence, la liaison entre le piston d'étanchéité (3) et le disque d'étanchéité (9) est réalisée par la coopération du moyen de fixation (10) et du moyen de fixation antagoniste (11) pour disposer l'élément d'étanchéité (4) sur le piston d'étanchéité (3).

6. Dispositif d'accouplement (40) selon l'une quelconque des revendications précédentes, une saillie (13) étant formée sur le disque d'étanchéité (9),
qui, de préférence à l'état fermé (51) du dispositif d'accouplement (40), peut être amené en liaison par complémentarité de forme avec un évidement (14) dans le premier logement d'accouplement (1).

7. Dispositif d'accouplement (40) selon l'une quelconque des revendications précédentes, le piston d'étanchéité (3) étant logé de manière mobile pour son mouvement sur un point d'appui (15), en particulier dans le premier logement d'accouplement (1),
de préférence au moins une bague de glissement (16) étant disposée au niveau du point d'appui (15), de préférence deux bagues de glissement (16) étant disposées pour permettre un mouvement particulièrement souple du piston d'étanchéité (3),
et/ou le mouvement du piston d'étanchéité (3) entre sa position de passage (60) et sa position d'étanchéité (61) étant un mouvement purement de translation ou un mouvement purement de rotation ou une combinaison de mouvement de translation et de rotation.

8. Dispositif d'accouplement (40) selon l'une quelconque des revendications précédentes, le piston d'étanchéité disposant d'au moins deux ouvertures (17), de préférence uniformément réparties sur la circonférence, et
en particulier les ouvertures (17) s'étendent dans la direction périphérique du piston d'étanchéité (3) et qui permettent un écoulement de fluide d'une zone extérieure (18) du piston d'étanchéité (3) dans un espace intérieur (19) du piston d'étanchéité (3) ou inversement,
de préférence les ouvertures (17) étant disposées près d'un côté de tête (28) du piston d'étanchéité (3), en particulier près de l'élément d'étanchéité (4).

9. Dispositif d'accouplement (40) selon l'une quelconque des revendications précédentes, le premier logement d'accouplement (1) et le deuxième logement d'accouplement (2) étant reliés entre eux par complémentarité de formes et/ou par adhérence, en particulier de manière réversible, de préférence par un assemblage vissé.

10. Dispositif d'accouplement (40) selon l'une quelconque des revendications précédentes, un deuxième élément d'étanchéité (22) positionné en particulier radialement étant disposé dans un interstice (25) entre le premier logement d'accouplement (1) et le deuxième logement d'accouplement (2) pour empêcher un courant de fuite,
qui s'étend de préférence sur toute la circonférence du interstice (25).

11. Dispositif d'accouplement (40) selon l'une quelconque des revendications précédentes, un troisième élément d'étanchéité (23), en particulier positionné radialement, étant disposé sur le premier logement d'accouplement (1), de préférence sur le côté intérieur, qui sert de préférence à étancher un interstice (26) entre le premier composant (100) conduisant le fluide et le premier logement d'accouplement (1), dans la mesure où le premier composant (100) conduisant le fluide est relié au dispositif d'accouplement (40).

12. Dispositif d'accouplement (40) selon l'une quelconque des revendications précédentes, un quatrième élément d'étanchéité (24), en particulier positionné radialement, étant disposé sur le deuxième logement d'accouplement (2), de préférence sur le côté intérieur,
qui sert en particulier à étancher un interstice (27) entre le deuxième composant (200) conduisant le fluide et le deuxième logement d'accouplement (2), dans la mesure où le deuxième composant (200) conduisant le fluide est relié au dispositif d'accouplement (40).

13. Dispositif d'accouplement (40) selon l'une quelconque des revendications précédentes, le premier élément d'étanchéité (4) et/ou le deuxième élément d'étanchéité (22) et/ou le troisième élément d'étanchéité (23) et/ou le quatrième élément d'étanchéité (24) étant fabriqués au moins partiellement, en particulier entièrement, en une matière plastique, de préférence en polytétrafluoroéthylène (PTFE),
et/ou dans lequel le piston d'étanchéité (3) et/ou le premier logement d'accouplement (1) et/ou le deuxième logement d'accouplement (1) est fabriqué dans un matériau résistant à la corrosion, de préférence en acier inoxydable, de manière particulièrement préférée en laiton nickelé.

14. Système d'accouplement (400) comprenant un dispositif d'accouplement (1) selon l'une des revendications 1 à 13 ainsi qu'un premier composant (100) conduisant un fluide et un deuxième composant (200) conduisant un fluide,
la liaison entre le premier logement d'accouplement (1) du dispositif d'accouplement (1) et le premier composant (100) conduisant le fluide étant réalisée de manière réversible et/ou la liaison entre le deuxième logement d'accouplement (2) du dispositif d'accouplement (1) et le deuxième composant (200) conduisant le fluide étant réalisée de manière réversible.
